# EUROPEAN PATENT APPLICATION

(11) **EP 4 203 595 A1**
(43) Date of publication of application: **28.06.2023**
(21) Application number: 21884732.5
(22) Date of filing: 06.09.2021
(51) Int. Cl.: H04W 74/00

(54) **MULTI-LINK LOW-LATENCY COMMUNICATION METHOD AND APPARATUS, AND STORAGE MEDIUM AND ELECTRONIC APPARATUS**

(30) Priority: 30.10.2020 CN 202011198055
(71) Applicant: ZTE Corporation, Shenzhen, Guangdong 518057 (CN)
(72) Inventor: LU, Liuming, Shenzhen, Guangdong 518057 (CN); YUAN, Liquan, Shenzhen, Guangdong 518057 (CN)
(74) Representative: Novagraaf Technologies
(86) International application number: PCT/CN2021/116755
(87) International publication number: WO 2022/089002

(57) **Abstract**

Provided are a multi-link low-delay communication method and apparatus, a memory medium, and an electronic apparatus. The method includes: determining a low-delay service support link set between an access point multi-link device and a non-access point multi-link device; establishing mapping between a low-delay service stream and one or more low-delay service support links in the low-delay service support link set; and transmitting the low-delay service stream on the one or more low-delay service support links. In the invention, the low-delay service support link set is evaluated and determined in real time, and mapping between the low-delay service stream and a relevant link is established, so that a low-delay service is transmitted on one or more links in the low-delay service support link set, thereby satisfying access requirements of the low-delay service to a great extent.

## Description

### Cross-Reference to Related Application

The invention claims the priority to Chinese Patent Application No. CN202011198055.X, filed to the Chinese Patent Office on October 30, 2020 and entitled "MULTI-LINK LOW-DELAY COMMUNICATION METHOD AND APPARATUS, AND STORAGE MEDIUM AND ELECTRONIC APPARATUS", which are incorporated in its entirety herein by reference.

### Technical Field

The present invention relates to the field of communication, and in particular to a multi-link low-delay communication method and apparatus, a storage medium, and an electronic apparatus.

### Background

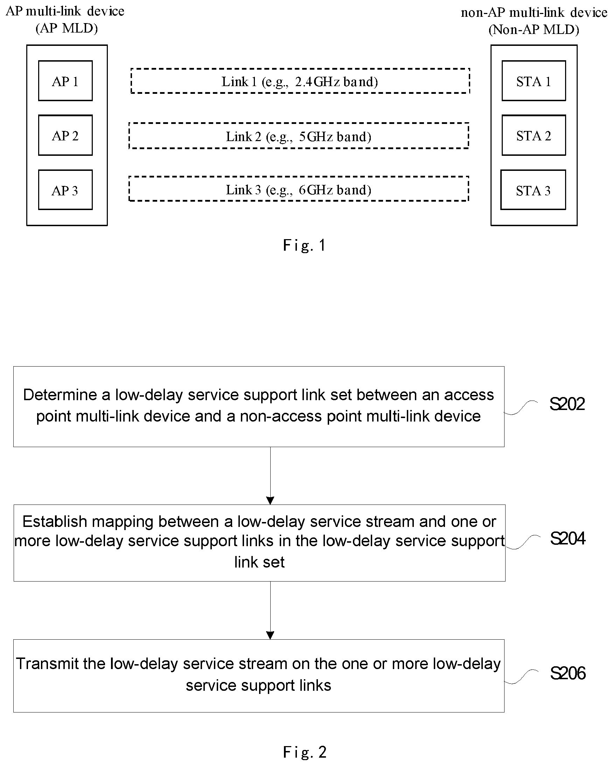

The next generation wireless fidelity (WIFI) standard (institute of electrical and electronics engineers (IEEE) 802.11be) proposes a multi-link operation and communication technique. Fig. 1 is a schematic structural diagram of a multi-link operation architecture in the related art. As shown in Fig. 1, a multi-link device (MLD) is provided with multiple attached stations (STAs). An MLD whose attached stations are all access points (APs) is an AP multi-link device (AP MLD), and an MLD whose attached stations are all non-access point (non-AP) stations is a non-AP multi-link device (Non-AP MLD). The STAs in the non-AP MLD in the figure can be associated with corresponding APs in the AP MLD, respectively, and each link can have its own corresponding communication channel. If the communication links are not accessed differently according to the service types and the requirements of a quality of service (QoS), it is difficult to embody the advantages of the multi-link in low-delay service carrying.

The existing enhanced distributed channel access (EDCA) mechanism of wireless fidelity (WIFI) employs a contention based channel access method, and thus cannot strictly satisfy the transmission requirements of the low-delay service. However, controlled channel access (HCCA) of hybrid coordination function (HCF) is greatly reduced in both reliability and robustness once data transmission is interfered by overlapping basic service set (OBSS), etc., and rarely applied.

There is currently no effective solution to the above problems.

### Summary

Examples of the invention provide a multi-link low-delay communication method and apparatus, a storage medium, and an electronic apparatus, so as to at least solve the problem that it is difficult for a wireless fidelity (WIFI) channel access mechanism in the related art to satisfy access requirements of a low-delay service.

An example of the invention provides a multi-link low-delay communication method. The method includes: determining a low-delay service support link set between an access point multi-link device and a non-access point multi-link device; establishing mapping between a low-delay service stream and one or more low-delay service support links in the low-delay service support link set; and transmitting the low-delay service stream on the one or more low-delay service support links.

In an illustrative example, the determining a low-delay service support link set between an access point multi-link device and a non-access point multi-link device includes: determining low-delay service support links between the access point multi-link device and the non-access point multi-link device according to at least one of the following: a channel access mode, a channel environment, link load or performance statistics information, admission control, a low-delay service priority, and service access of a specific quality of service (QoS) type; and forming the determined low-delay service support links into the low-delay service support link set.

In an illustrative example, the determining low-delay service support links between the access point multi-link device and the non-access point multi-link device includes: according to requirements of a quality of service (QoS) and/or configuration parameters of a low-delay service, determining the low-delay service support link from multiple links between the access point multi-link device and the non-access point multi-link device according to at least one of the following selection rules: whether to support a priority, a priority queue, or a channel access parameter corresponding to the low-delay service; whether to employ an admission control strategy; whether to employ the channel access mode optimizing access of the low-delay service; whether basic service set (BSS) load satisfies access requirements of the low-delay service; whether throughput satisfies requirements of the low-delay service; whether a packet loss and/or the number of retransmission exceeds a preset threshold; whether to limit the service access of the specific QoS type; and whether a delay in an uplink or downlink direction satisfies access requirements of the low-delay service.

In an illustrative example, types of delay parameters include at least one of the following: access delays of all access controllers (ACs), an access delay of a specific AC, a transmission delay, a BSS internal delay, a BSS external delay, and a reachable optimal delay; and the delay parameter is one of the following: an average delay, a maximum delay, a delay in a particular percentile.

In an illustrative example, the employing the channel access mode optimizing access of the low-delay service includes: employing different access time periods and/or access channels for a low-delay service type and other service types.

In an illustrative example, after the determining low-delay service support links between the access point multi-link device and the non-access point multi-link device, the method further includes: monitoring a communication environment and relevant parameters related to the selection rule in real time according to a current network condition, in response to determining that the communication environment and the relevant parameters related to the selection rule are updated, re-determining a current low-delay service support link, and in response to determining that the communication environment and the relevant parameters related to the selection rule are not updated, continue retaining an original low-delay service support link.

In an illustrative example, the establishing mapping between a low-delay service stream and one or more low-delay service support links in the low-delay service support link set includes: establishing mapping between the low-delay service stream and one or more low-delay service support links in the low-delay service support link set through negotiation between the access point multi-link device and the non-access point multi-link device.

In an illustrative example, the establishing mapping between a low-delay service stream and one or more low-delay service support links in the low-delay service support link set at least includes one of the following: establishing mapping between the low-delay service stream and multiple working links, the multiple working links being the low-delay service support links in different time periods; and establishing mapping between the low-delay service stream and one or more specific low-delay service support links.

In an illustrative example, the establishing mapping between the low-delay service stream and multiple working links includes: mapping the low-delay service stream to all working links, and selecting one or more working links belonging to the low-delay service support link as a transmission link/transmission links of the low-delay service stream according to different time periods.

In an illustrative example, the establishing mapping between the low-delay service stream and a specific low-delay service support link includes: performing mapping between a flow identifier, thread identifier (TID) of the low-delay service and the one or more selected specific low-delay service support links.

In an illustrative example, after the establishing mapping between the low-delay service stream and one or more low-delay service support links in the low-delay service support link set, the method further includes: re-establishing mapping between the low-delay service stream and one or more low-delay service support links through negotiation between the access point multi-link device and the non-access point multi-link device when the low-delay service support link set is updated.

In an illustrative example, the establishing mapping between the low-delay service stream and the low-delay service support link through negotiation between the access point multi-link device and the non-access point multi-link device includes at least one of the following: for a downlink low-delay service stream, the access point multi-link device determining the low-delay service support link set, and negotiating with the non-access point multi-link device to determine mapping between the low-delay service stream and the low-delay service support link; and for an uplink low-delay service stream, the non-access point multi-link device determining the low-delay service support link set, and negotiating with the access point multi-link device to determine mapping between the low-delay service and the low-delay service support link; and alternatively, the access point multi-link device determining the low-delay service support link set, and negotiating with the non-access point multi-link device to determine mapping between the low-delay service and the low-delay service support link.

Another example of the invention provides a multi-link low-delay communication apparatus. The apparatus includes: a determination module configured for determining a low-delay service support link set between an access point multi-link device and a non-access point multi-link device; a mapping module configured for establishing mapping between a low-delay service stream and one or more low-delay service support links in the low-delay service support link set; and a transmission module configured for transmitting the low-delay service stream on the one or more low-delay service support links.

Yet another example of the invention provides a computer-readable storage medium. The computer-readable storage medium stores a computer program, where the computer program is configured for executing steps of any one of the method examples described above when run.

Yet another example of the invention provides an electronic apparatus. The electronic apparatus includes a memory and a processor, where the memory stores a computer program, and the processor is configured for running the computer program to execute steps of any one of the method examples described above.

In the examples described above of the invention, the low-delay service support link set is evaluated and determined in real time, and mapping between the low-delay service stream and a relevant link is established, so that the low-delay service is transmitted on one or more links in the low-delay service support link set, thereby satisfying access requirements of the low-delay service to a great extent.

### Brief Description of the Drawings

Fig. 1 is a schematic structural diagram of a multi-link operation architecture in the related art;
Fig. 2 is a flowchart of a multi-link low-delay communication method according to an example of the invention;
Fig. 3 is a structural block diagram of a multi-link low-delay communication apparatus according to an example of the invention;
Fig. 4 is a flowchart of a multi-link low-delay communication method according to an example of the invention;
Fig. 5 is a schematic diagram of classification of communication link sets of a multi-link device according to an example of the invention;
Fig. 6 is a flowchart of real-time evaluation and update of a low-delay service support link set according to an example of the invention;
Fig. 7 is a schematic flowchart of mapping and communication between a low-delay service and a relevant link according to an example of the invention;
Fig. 8 is a schematic flowchart of mapping and communication between a low-delay service and a working link according to an example of the invention; and
Fig. 9 is a schematic flowchart of mapping and communication between a low-delay service and a low-delay support link according to an example of the invention.

### Detailed Description of the Embodiments

The examples of the invention will be described in detail below in conjunction with the accompanying drawings and the examples.

It should be noted that the terms "first", "second", etc. in the description and claims of the invention are used for distinguishing between similar objects, instead of necessarily describing a specific sequence or a precedence order.

The example provides a multi-link low-delay communication method. The method may run on a multi-link device (MLD). Fig. 2 is a flowchart of a method according to an example of the invention. As shown in Fig. 2, the flow may include:
Step S202, a low-delay service support link set between an access point (AP) multi-link device and a non-access point multi-link device is determined.
Step S204, mapping between a low-delay service stream and one or more low-delay service support links in the low-delay service support link set is established.
Step S206, the low-delay service stream is transmitted on the one or more low-delay service support links.

In step S202 of the example, low-delay service support links between the access point multi-link device and the non-access point multi-link device may be determined according to at least one of the following: a channel access mode, a channel environment, link load or performance statistics information, admission control, a low-delay service priority, and service access of a specific quality of service (QoS) type; and the determined low-delay service support links are formed into the low-delay service support link set.

In step S202 of the example, according to requirements of the QoS and/or configuration parameters of a low-delay service, the low-delay service support link may be determined from multiple links between the access point multi-link device and the non-access point multi-link device according to at least one of the following selection rules: whether to support a priority, a priority queue, or a channel access parameter corresponding to the low-delay service; whether to employ an admission control strategy; whether to employ the channel access mode optimizing access of the low-delay service; whether basic service set (BSS) load satisfies access requirements of the low-delay service; whether throughput satisfies requirements of the low-delay service; whether a packet loss and/or the number of retransmission exceeds a preset threshold; whether to limit the service access of the specific QoS type; and whether a delay in an uplink or downlink direction satisfies access requirements of the low-delay service. Types of delay parameters may include one or more of the following: access delays of all access controllers (ACs), an access delay of a specific AC, a transmission delay, a BSS internal delay, a BSS external delay, a reachable optimal delay, etc.; and the delay parameters of all the types may include: an average delay, a maximum delay, a delay in a particular percentile, etc.

In an example, the step of employing the channel access mode optimizing access of the low-delay service may include: different access time periods and/or access channels are employed for a low-delay service type and other service types.

After step S202 of the example, the method may further include: a communication environment and relevant parameters related to the selection rule are monitored in real time according to a current network condition, in response to determining that the communication environment and the relevant parameters related to the selection rule are updated, a current low-delay service support link is re-determined, and in response to determining that the communication environment and the relevant parameters related to the selection rule are not updated, an original low-delay service support link continues being retained.

In step S204 of the example, mapping between the low-delay service stream and one or more low-delay service support links in the low-delay service support link set may be established through negotiation between the access point multi-link device and the non-access point multi-link device.

In an example, the step that mapping between the low-delay service stream and one or more low-delay service support links in the low-delay service support link set is established at least includes one of the following: mapping between the low-delay service stream and multiple working links is established, the multiple working links being low-delay service support links in different time periods; and mapping between the low-delay service stream and one or more specific low-delay service support links is established.

In an example, the step that mapping between the low-delay service stream and multiple working links is established may include: the low-delay service stream is mapped to all working links, and one or more working links belonging to the low-delay service support link are selected as a transmission link/transmission links of the low-delay service stream according to different time periods.

In an example, the step that mapping between the low-delay service stream and a specific low-delay service support link is established may include: mapping between a flow identifier of the low-delay service and the one or more selected specific low-delay service support links is performed.

After step S204 of the example, the method may further include: mapping between the low-delay service stream and one or more low-delay service support links is re-established through negotiation between the access point multi-link device and the non-access point multi-link device when the low-delay service support link set is updated.

In an example, the step that mapping between the low-delay service stream and the low-delay service support link is established through negotiation between the access point multi-link device and the non-access point multi-link device includes at least one of the following: for a downlink low-delay service stream, the access point multi-link device determines the low-delay service support link set, and negotiates with the non-access point multi-link device to determine mapping between the low-delay service stream and the low-delay service support link; and for an uplink low-delay service stream, the non-access point multi-link device determines the low-delay service support link set, and negotiates with the access point multi-link device to determine mapping between the low-delay service and the low-delay service support link; and alternatively, the access point multi-link device determines the low-delay service support link set, and negotiates with the non-access point multi-link device to determine mapping between the low-delay service and the low-delay service support link.

Through the above description of the example, those skilled in the art can clearly understand that the method of the example described above can be implemented by means of software plus necessary general hardware platforms, and certainly can also be implemented through hardware. The former is a better embodiment in many cases. Based on such understanding, the technical solution in essence of the invention or the part that contributes to the prior art can be embodied in the form of software products. The computer software product is stored in one storage medium (such as a read-only memory (ROM)/a random access memory (RAM), a magnetic disk, or an optical disk), and includes several instructions to make one terminal device (such as a mobile phone, a computer, a server, or a network device) execute the method of each example of the invention.

The example further provides a multi-link low-delay communication apparatus. The device is configured for implementing the example described above and preferred embodiments, the repetitions of which will not be described in detail herein. As used below, the term "module" can be a combination of software and/or hardware that implements a preset function. While the apparatus described in the following example is preferably implemented through software, it is possible to conceive that the apparatus is implemented through hardware, or a combination of the software and the hardware.

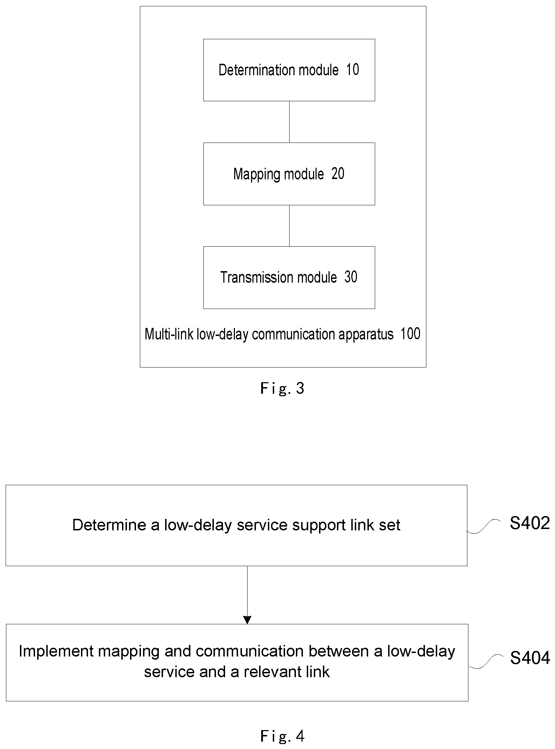

Fig. 3 is a structural block diagram of a multi-link low-delay communication apparatus according to an example of the invention. The apparatus may be positioned in a multi-link device, for example, an AP multi-link device or a non-AP multi-link device, or arranged in combination with the multi-link device. As shown in Fig. 3, the multi-link low-delay communication apparatus 100 may include: a determination module 10, a mapping module 20, and a transmission module 30.

The determination module 10 is configured for determining a low-delay service support link set between an access point multi-link device and a non-access point multi-link device.

The mapping module 20 is configured for establishing mapping between a low-delay service stream and one or more low-delay service support links in the low-delay service support link set.

The transmission module 30 is configured for transmitting the low-delay service stream on the one or more low-delay service support links.

It should be noted that each module described above can be implemented through software or hardware. The latter can be implemented through, but not limited to, the following modes: the modules described above are all positioned in the same processor; and alternatively, all the modules described above are positioned in different processors in any combination.

The technical solution provided by the invention will be described in detail below in combination with examples of specific scenes, so as to facilitate the understanding of the technical solution.

In order to solve the problem that it is difficult for an existing wireless fidelity (WIFI) channel access mechanism to satisfy access requirements of a low-delay service, the example provides a multi-link based low-delay service transmission mechanism. Multiple links are distinguished from one another according to a communication environment and an access method and strategy, the low-delay service support link set is evaluated and determined in real time, and the low-delay service is transmitted on one or more links in the low-delay service support link set through mapping between the low-delay service stream and a relevant link.

Fig. 4 is a flowchart of a multi-link low-delay communication method according to an example of the invention. As shown in Fig. 4, the flow includes:
Step S402, a low-delay service support link set is determined.

In step S402 of the example, according to one or more conditions, for example, a channel access method, a channel environment, link load or performance statistics information, whether to support admission control, whether to support a priority of the low-delay service, whether to limit service access of a specific quality of service (QoS) type, etc., whether the link is a link supporting the low-delay service (the low-delay service support link for short) is determined, and all low-delay service support links of the current multi-link device (MLD) are formed into one low-delay service support link set.

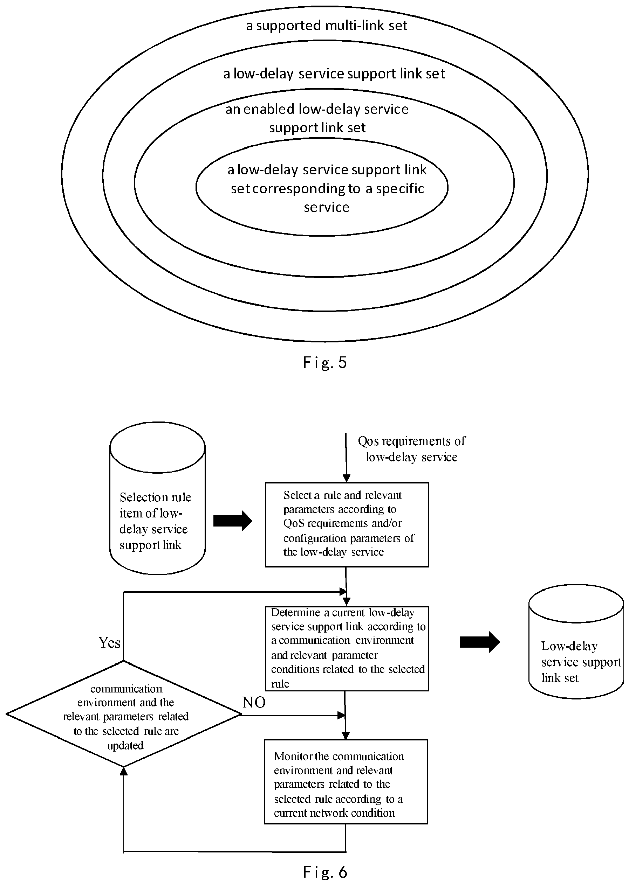

Fig. 5 is a schematic diagram of classification and correlation of an MLD communication link set according to an optional example of the invention. As shown in Fig. 5, communication links between an access point multi-link device (AP MLD) and a non-access point multi-link device (Non-AP MLD) may be classified into the following types:
a supported multi-link set: indicating a communication link set supported between two MLD devices communicating with each other;
a low-delay service support link set: indicating a link set conforming to access conditions of a specific low-delay service;
an enabled low-delay service support link set: indicating that there has been a link set of access of a low-delay service in the low-delay service support link set; and
a low-delay service support link set corresponding to a specific service: indicating a low-delay service support link set that supports a specific low-delay service stream in an enabled low-delay service support link set.

In an example, step S402 may specifically include: according to requirements of QoS and/or configuration parameters of the low-delay service, it is determined whether a link among multiple links supported between a non-access point multi-link device (non-AP MLD) and an access point multi-link device (AP MLD) required to access the low-delay service is the low-delay service support link according to one or more of the following rules:
(1) whether to support a priority, a priority queue, and a channel access parameter corresponding to the low-delay service.
(2) whether to employ a strict admission control strategy.
(3) whether to employ a channel access method optimizing access of the low-delay service, including whether to distinguish a low-delay service type from other service types on the basis of an access time and/or access channel, where the step that whether to distinguish the low-delay service type from other service types on the basis of the access time (channel) means that the low-delay service type and the other service types employ different access time periods (or subchannels/auxiliary channels), and the access time periods (or sub-channels/auxiliary channels) are controllable or configurable.
(4) whether BSS load where a current link is positioned satisfies access requirements of the low-delay service.
(5) whether throughput reachable currently satisfies requirements of the low-delay service.
(6) whether a packet loss and/or the number of retransmission in a specific time period exceeds a preset threshold.
(7) whether to limit service access of a specific QoS type.
(8) whether delay performance in an uplink or downlink direction satisfies access requirements of the low-delay service, where type of delay parameters include one or more of the following: access delays of all access controllers (ACs), an access delay of a specific AC, a transmission delay, a BSS internal delay, a BSS external delay, a reachable optimal delay, etc.; and the delay parameters of all the types may include an average delay, a maximum delay, a delay in a particular percentile, etc.

In an example, the multi-link device (MLD) may also update the low-delay service support link based on a current operation condition of a network link.

Fig. 6 is a schematic diagram of a real-time evaluation and update mode of a low-delay service support link set according to an optional example of the invention. As shown in Fig. 6, a multi-link device set is updated based on whether a channel access method, a channel environment, link load or performance statistics information, whether to support admission control, whether to support service access of a specific QoS type, etc. are changed, which may specifically include:
(1) a rule and relevant parameters are selected from a selection rule item of the low-delay service support link according to the requirements of QoS and/or the configuration parameters of the low-delay service.
(2) a current low-delay service support link is determined according to a communication environment and relevant parameter conditions related to the selected rule.
(3) a communication environment and relevant parameters related to the selected rule are monitored in real time according to a current network condition. In response to determining that the communication environment and the relevant parameters related to the selected rule are updated, a current low-delay service support link is re-determined, and in response to determining that the communication environment and the relevant parameters related to the selected rule are not updated, an original low-delay service support link continues being retained.

Step S404, mapping and communication between the low-delay service and the relevant link are implemented.

In step S402 of the example, when a certain station (STA) of the MLD initiates a low-delay service access request, the current low-delay service support link is determined firstly according to the requirements of QoS of the low-delay service and a network environment. If the current MLD does not have the low-delay service support link, the request is rejected. If the current MLD has the low-delay service support link, the request is accepted. Mapping between a service stream and the low-delay service support link is performed through two methods, one of which is mapping between a low-delay service stream and all working links, and the other of which is mapping between the low-delay service stream and a specific low-delay service support link. No matter which mapping method is employed, in an access process of the low-delay service, transmission of the low-delay service is guaranteed to be performed in one or more links in the low-delay service support link set.

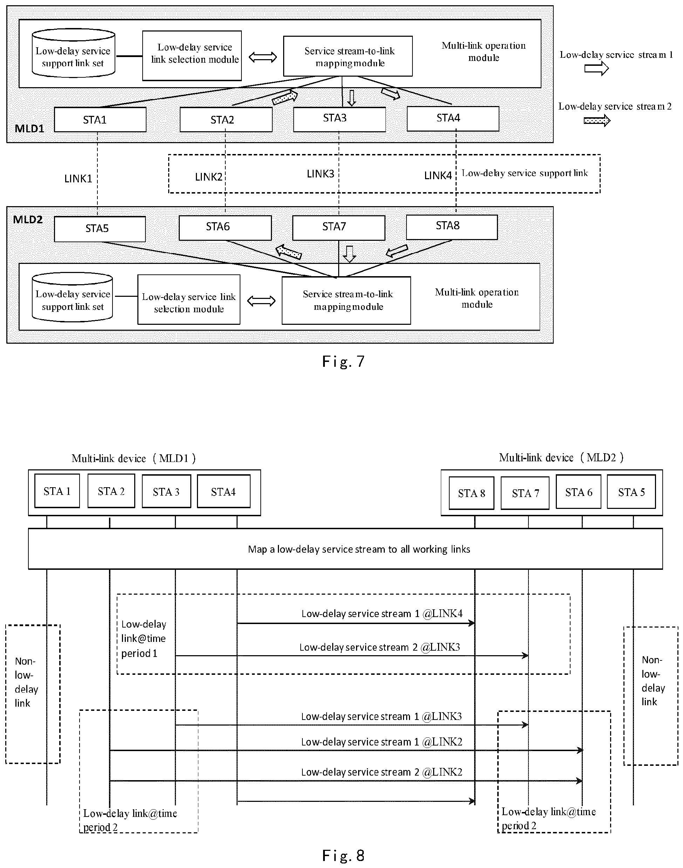

Fig. 7 is a schematic diagram of a mapping and communication mode of a low-delay service and a relevant link according to an optional example of the invention. As shown in Fig. 7, for a multi-link device (MLD), a low-delay service link selection module and a service stream-to-link mapping module may be integrated in a multi-link operation module, so as to be configured for determining a low-delay service support link set and mapping between a low-delay service and a relevant link, and for selecting one or more mapped low-delay service support links for transmission in a service stream access process. For an access point multi-link device (AP MLD) and its associated non-access point multi-link device (Non-AP MLD), the low-delay service link selection module may be implemented in the AP MLD and/or the Non-AP MLD. While the service stream-to-link mapping module is implemented in both the AP MLD and the Non-AP MLD, and mapping between the low-delay service and the relevant link is required to determined through negotiation between the AP MLD and the Non-AP MLD. For a downlink low-delay service stream, the AP MLD determines a low-delay service support link set, negotiates with the Non-AP MLD to determine mapping between the low-delay service and the relevant link, and selects one or more mapped low-delay service support links for transmission in the service stream access process. For an uplink low-delay service stream, the Non-AP MLD determines a low-delay service support link set, negotiates with the AP MLD to determine mapping between the low-delay service and the relevant link. Alternatively, the AP MLD determines a low-delay service support link set, and negotiates with the Non-AP MLD to determine mapping between the low-delay service and the relevant link. The Non-AP MLD is required to report a communication environment and relevant parameters in an uplink direction. The Non-AP MLD selects one or more mapped low-delay service support links for transmission in a service stream access process. As shown in Fig. 7, LINK2, LINK3, and LINK4 are low-delay service support links, low-delay service stream 1 is transmitted on LINK3 and LINK4, and low-delay service stream 2 is transmitted on LINK2.

In an example, the method for mapping and communication between a low-delay service and a relevant link may specifically include mapping and communication between the low-delay service and the working link, and mapping and communication between the low-delay service and the low-delay support link.
1. mapping and communication between the low-delay service and the working link.

Fig. 8 is a schematic diagram of a mapping and a communication mode between a low-delay service and a working link according to an optional example of the invention. As shown in Fig. 8, mapping between a low-delay service stream and all working links is performed firstly. Only one or more links are selected from a low-delay service support link set for communication in a communication process. The selected communication link may be updated correspondingly with changes of the low-delay service support link.

As shown in Fig. 8, in an example, the low-delay service stream is mapped to all the working links, that is, LINK1, LINK2, LINK3, and LINK4 firstly. Only LINK3 and LINK4 are the low-delay service support links in time period 1, so that only LINK3 and/or LINK4 is selected for transmission in an actual transmission process of the low-delay service. Only LINK2 and LINK3 are the low-delay service support links in time period 2, so that only LINK2 and/or LINK3 is selected for transmission in an actual transmission process of the low-delay service.

2. mapping and communication between the low-delay service and the low-delay support link.

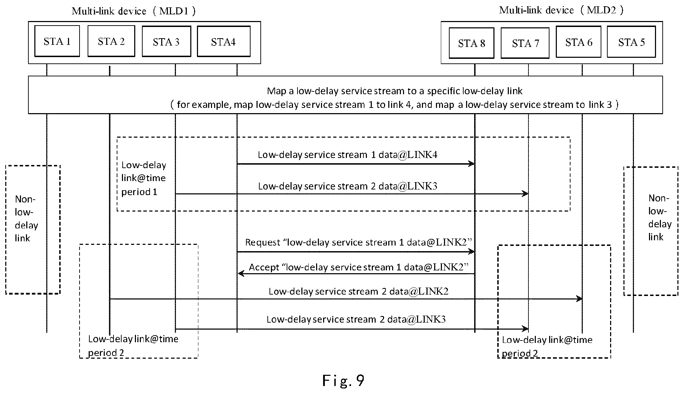

Fig. 9 is a schematic diagram of a mapping and communication mode between a low-delay service and a low-delay support link according to an example of the invention. As shown in Fig. 9, mapping between a low-delay service stream and a specific low-delay service support link is performed firstly, and one or more links are selected from a low-delay service support link set in an MLD to access a low-delay service. It is assumed that a flow identifier of the low-delay service is a thread identifier (TID), mapping (TID-LINK-MAPPING) between the TID and the selected low-delay service support link (LINK) is implemented. In an access and communication process of the low-delay service, if the low-delay service support link set is updated, mapping (TID-LINK-MAPPING) between the TID and the selected low-delay service support link (LINK) is re-performed, and a dynamic adjustment is performed through a link mapping negotiation mechanism.

As shown in Fig. 9, in an example, a low-delay service stream is mapped to the specific low-delay link firstly. For example, in time period 1, low-delay service stream 1 is mapped to LINK4, and low-delay service stream 2 is mapped to LINK3. However, when the low-delay service support link is changed, mapping is re-performed. For example, in time period 2, LINK2 and LINK3 are the low-delay service support links, through negotiation, MLD1 and MLD2 determine to map low-delay service stream 1 to LINK2. After the negotiation is successful, low-delay service stream 2 is transmitted through LINK2.

In an examples described above of the invention, a multi-link based low-delay service transmission mechanism is provided. The multiple links are distinguished from one another according to the communication environment and the access method and strategy, the low-delay service support link set is evaluated and determined in real time, and the low-delay service is transmitted on one or more links in the low-delay service support link set through mapping between the low-delay service stream and the relevant link.

An example of the invention further provides a computer-readable storage medium, storing a computer program, where the computer program is configured for executing steps of any one of the method examples described above when run.

In an illustrative example, the computer-readable storage media described above may include, but are not limit to, various media storing a computer program, such as a universal serial bus (USB) flash disk, a read-only memory (ROM for short), a random access memory (RAM for short), a mobile hard disk, a magnetic disk or an optical disk, etc.

An example of the invention further provides an electronic apparatus, including a memory and a processor, where the memory stores a computer program, and the processor is configured for running the computer program to execute steps of any one of the method examples described above.

In an illustrative example, the electronic apparatus described above may further include a transmission device and an input/output device, where both the transmission device and the input/output device are connected with the processor described above.

For the specific instances in the examples, reference may be made to the instances described in the examples described above and the illustrative embodiments, which will not be described in detail herein.

Apparently, those skilled in the art should understand that all the modules or all the steps described above of the invention can be implemented through a general computing apparatus, centralized on a single computing apparatus or distributed over a network composed of multiple computing apparatuses, and implemented through program codes executable by the computing apparatus. Therefore, they can be stored in a storage apparatus to be executed by the computing apparatus. In certain cases, the steps shown or described can be executed in a different order from herein. Alternatively, they can be implemented by fabricating same as individual integrated circuit modules separately, or by fabricating multiple modules or steps thereof as a single integrated circuit module. In this way, the invention is not limited to any specific combination of hardware and software.

What are described above are merely the preferred examples of the invention, but are not intended to limit the invention. Those skilled in the art can make various modifications and variations to the invention. Any modifications, equivalent replacements, improvements, etc. made within the spirit of the invention should all fall within the scope of protection of the invention.

## Claims

1. A multi-link low-delay communication method, comprising:
determining a low-delay service support link set between an access point multi-link device and a non-access point multi-link device;
establishing mapping between a low-delay service stream and one or more low-delay service support links in the low-delay service support link set; and
transmitting the low-delay service stream on the one or more low-delay service support links.

2. The method according to claim 1, wherein the determining a low-delay service support link set between an access point multi-link device and a non-access point multi-link device comprises:
determining low-delay service support links between the access point multi-link device and the non-access point multi-link device according to at least one of the following: a channel access mode, a channel environment, link load or performance statistics information, admission control, a low-delay service priority, and service access of a specific quality of service, QoS, type; and
forming the determined low-delay service support links into the low-delay service support link set.

3. The method according to claim 2, wherein the determining low-delay service support links between the access point multi-link device and the non-access point multi-link device comprises:
according to requirements of a QoS and/or configuration parameters of a low-delay service, determining the low-delay service support link from multiple links between the access point multi-link device and the non-access point multi-link device according to at least one of the following selection rules:
whether to support a priority, a priority queue, or a channel access parameter corresponding to the low-delay service;
whether to employ an admission strategy;
whether to employ the channel access mode optimizing access of the low-delay service;
whether basic service set, BSS, load satisfies access requirements of the low-delay service;
whether throughput satisfies requirements of the low-delay service;
whether a packet loss and/or the number of retransmission exceeds a preset threshold;
whether to limit the service access of the specific QoS type; and
whether a delay in an uplink or downlink direction satisfies access requirements of the low-delay service.

4. The method according to claim 3, wherein types of delay parameters comprise at least one of the following: access delays of all access controllers, ACs, an access delay of a specific AC, a transmission delay, a BSS internal delay, a BSS external delay, and a reachable optimal delay; and the delay parameter is one of the following: an average delay, a maximum delay, a delay in a particular percentile.

5. The method according to claim 3, wherein the employing the channel access mode optimizing access of the low-delay service comprises:
employing different access time periods and/or access channels for a low-delay service type and other service types.

6. The method according to claim 3, wherein after the determining low-delay service support links between the access point multi-link device and the non-access point multi-link device, the method further comprises:
monitoring a communication environment and relevant parameters related to the selection rule in real time according to a current network condition, in response to determining that the communication environment and the relevant parameters related to the selection rule are updated, re-determining a current low-delay service support link, and in response to determining that the communication environment and the relevant parameters related to the selection rule are not updated, continue retaining an original low-delay service support link.

7. The method according to claim 1, wherein the establishing mapping between a low-delay service stream and one or more low-delay service support links in the low-delay service support link set comprises:
establishing mapping between the low-delay service stream and one or more low-delay service support links in the low-delay service support link set through negotiation between the access point multi-link device and the non-access point multi-link device.

8. The method according to claim 7, wherein the establishing mapping between a low-delay service stream and one or more low-delay service support links in the low-delay service support link set at least comprises one of the following:
establishing mapping between the low-delay service stream and multiple working links, each working link being a low-delay service support link in a corresponding time period; and
establishing mapping between the low-delay service stream and one or more specific low-delay service support links.

9. The method according to claim 8, wherein the establishing mapping between the low-delay service stream and multiple working links comprises:
mapping the low-delay service stream to all working links, and selecting one or more working links belonging to the low-delay service support link as a transmission link/transmission links of the low-delay service stream according to different time periods.

10. The method according to claim 8, wherein the establishing mapping between the low-delay service stream and a specific low-delay service support link comprises:
performing mapping between a flow identifier of the low-delay service and the one or more selected specific low-delay service support links.

11. The method according to claim 7, wherein after the establishing mapping between the low-delay service stream and one or more low-delay service support links in the low-delay service support link set, the method further comprises:
re-establishing mapping between the low-delay service stream and one or more low-delay service support links through negotiation between the access point multi-link device and the non-access point multi-link device when the low-delay service support link set is updated.

12. The method according to claim 7, wherein the establishing mapping between the low-delay service stream and the low-delay service support link through negotiation between the access point multi-link device and the non-access point multi-link device comprises at least one of the following:
for a downlink low-delay service stream, the access point multi-link device determining the low-delay service support link set, and negotiating with the non-access point multi-link device to determine mapping between the low-delay service stream and the low-delay service support link; and
for an uplink low-delay service stream, the non-access point multi-link device determining the low-delay service support link set, and negotiating with the access point multi-link device to determine mapping between the low-delay service and the low-delay service support link; and alternatively, the access point multi-link device determining the low-delay service support link set, and negotiating with the non-access point multi-link device to determine mapping between the low-delay service and the low-delay service support link.

13. A multi-link low-delay communication apparatus, comprising:
a determination module configured for determining a low-delay service support link set between an access point multi-link device and a non-access point multi-link device;
a mapping module configured for establishing mapping between a low-delay service stream and one or more low-delay service support links in the low-delay service support link set; and
a transmission module configured for transmitting the low-delay service stream on the one or more low-delay service support links.

14. A computer-readable storage medium, storing a computer program, wherein the computer program is configured to, when executed by a processor, perform steps of the method as claimed in any one of claims 1-11.

15. An electronic apparatus, comprising a memory, a processor, and a computer program stored on the memory and runnable on the processor, wherein the processor is configured to execute the computer program to perform steps of the method as claimed in any one of claims 1-12.
